# EUROPÄISCHE PATENTSCHRIFT

(11) **EP 3 408 645 B1**
(45) Veröffentlichungstag und Bekanntmachung des Hinweises auf die Patenterteilung: **01.09.2021**
(21) Anmeldenummer: 17705803.9
(22) Anmeldetag: 26.01.2017
(51) Int. Cl.: G01N 15/06, G01N 15/00

(54) **SENSOR FÜR EIN KRAFTFAHRZEUG UND VERFAHREN ZUR HERSTELLUNG EINES SENSORS FÜR EIN KRAFTFAHRZEUG**
SENSOR FOR A MOTOR VEHICLE AND METHOD FOR PRODUCING A SENSOR FOR A MOTOR VEHICLE
CAPTEUR POUR UN VÉHICULE À MOTEUR ET PROCÉDÉ DE FABRICATION D'UN CAPTEUR POUR UN VÉHICULE À MOTEUR

(30) Priorität: 29.01.2016 DE 102016201343
(43) Veröffentlichungstag der Anmeldung: 05.12.2018
(73) Patentinhaber: Vitesco Technologies GmbH, 30165 Hannover (DE)
(72) Erfinder: KIEFL, Christian, 94377 Münster (DE); FRIEDEL, Jörg, 93173 Wenzenbach/Grünthal (DE)
(86) Internationale Anmeldenummer: PCT/EP2017/051655
(87) Internationale Veröffentlichungsnummer: WO 2017/129684

(56) Entgegenhaltungen:
- CN-U- 202 611 820
- US-A1- 2011 062 973
- US-A1- 2013 219 990

## Beschreibung

Die Erfindung betrifft einen Sensor für ein Kraftfahrzeug, insbesondere einen kapazitiven Abgassensor. Die Erfindung betrifft weiterhin ein Verfahren zur Herstellung eines derartigen Sensors.

In Kraftfahrzeugen werden unterschiedlichste Sensoren eingesetzt, um Parameter zu detektieren, die für den Betrieb des Kraftfahrzeugs nützlich sind. Beispielsweise werden auch Sensoren eingesetzt, um die Konzentration von bestimmten Stoffen im Abgas zu ermitteln.

Aus der CN 202611820 U ist ein elektrostatischer Partikelsensor bekannt.

Die US 2013/0219990 A1 beschreibt einen Sensor zum Erfassen von Partikeln im Abgasstrang einer Brennkraftmaschine.

Es ist wünschenswert, einen Sensor für ein Kraftfahrzeug anzugeben, der eine hohe Genauigkeit aufweist. Es ist weiterhin wünschenswert, ein Verfahren zur Herstellung eines Sensors beim Kraftfahrzeug anzugeben, das einen Sensor mit hoher Genauigkeit ermöglicht.

Gemäß einer Ausführungsform der Erfindung weist ein Sensor für ein Kraftfahrzeug einen Anodenleiter auf, der sich entlang einer Längsachse erstreckt. Der Sensor weist eine Anodenhülse auf, die mit dem Anodenleiter verbunden ist. Der Sensor weist eine Anpasshülse auf, die sich entlang der Längsachse erstreckt und zumindest abschnittsweise einen Außendurchmesser aufweist, wobei der Anodenleiter mittels eines elektrischen Isolators starr mit der Anpasshülse verbunden ist. Der Anodenleiter ist länger ausgebildet als die Anpasshülse und weist einen Bereich auf, der entlang der Längsachse über die Anpasshülse vorspringt. Die Anodenhülse ist mit dem Anodenleiter verbunden und auf den Bereich des Anodenleiters aufgesteckt. Der Sensor weist ein Gehäuse auf, das zumindest abschnittsweise einen Innendurchmesser aufweist, der größer ist als der Außendurchmesser der Anpasshülse, so dass die Anpasshülse mit einem Spiel im Gehäuse angeordnet ist. Der Sensor weist eine Verbindung auf, die das Gehäuse und die Anpasshülse miteinander verbindet. Der Sensor weist eine Kathodenhülse auf, die mit dem Gehäuse derart verbunden ist, dass die Kathodenhülse die Anodenhülse entlang der Längsachse umgibt und dass zwischen der Kathodenhülse und der Anodenhülse ein umlaufender Spalt ausgebildet ist. Die Anodenhülse und die Kathodenhülse sind im Rahmen der Herstellungstoleranzen koaxial zueinander angeordnet.

Der Sensor ist insbesondere ein kapazitiver Abgassensor. Der Sensor dient beispielsweise dazu, Rußpartikel beziehungsweise eine Konzentration von Rußpartikeln im Abgas zu detektieren. Im Betrieb wird zwischen der Anodenhülse und der Kathodenhülse ein elektrisches Feld erzeugt. Das elektrische Feld wird beim Durchqueren von Rußpartikeln beeinflusst und erzeugt somit ein Messsignal, das abhängig ist von der Konzentration der Rußpartikel im Abgasstrom.

Der Anodenleiter, die Anodenhülse, die Anpasshülse, das Gehäuse und die Kathodenhülse erstrecken sich länglich ausgedehnt entlang einer Längsachse. Diese Bauteile des Sensors sind im Rahmen der Herstellungstoleranzen koaxial zu dieser Längsachse ausgerichtet. Entlang der Längsachse müssen die Bauteile nicht vollständig überlappen. Insbesondere bedeutet koaxial in diesem Zusammenhang, dass die Bauteile in einer Projektion auf eine Ebene quer zur Längsachse konzentrisch sind.

Durch die Verwendung der Anpasshülse, mit der der Anodenleiter starr verbunden ist, sind die Herstellungstoleranzen beim Verbinden des Anodenleiters mit dem umgebenden Element entkoppelt von der Ausrichtung der Anodenhülse zum Gehäuse beziehungsweise der Anodenhülse zur Kathodenhülse. Die Kathodenhülse ist mit dem Gehäuse verbunden und ist nicht unmittelbar mit der Anpasshülse verbunden. Somit sind die Bauteile, die für die Ausrichtung der Kathodenhülse relativ zur Anodenhülse ausschlaggebend sind, zumindest während der Herstellung voneinander entkoppelt. Somit ist es möglich, die Anodenhülse und die Kathodenhülse über die gesamte Länge der Anodenhülse möglichst koaxial zueinander auszurichten. Somit weist der Sensor einen exakten und konstanten Luftspalt zwischen der Anodenhülse und der Kathodenhülse auf. Somit ist eine hohe Genauigkeit des Messsignals möglich. Eine zu starke Abweichung der Koaxialität kann vermieden werden. Somit ist ein kapazitiver Sensor mit einer hohen Auflösung beziehungsweise Genauigkeit möglich, der insbesondere eine mindestens genauso gute Genauigkeit wie ein resistiver Sensor aufweist.

Gemäß Ausführungsformen sind der Anodenleiter und der Isolator mittels einer Lötverbindung mit der Anpasshülse verbunden. Insbesondere wird ein Hartlötverfahren verwendet mit Temperaturen beispielsweise bis zu 950 °C. Die Anpasshülse bildet mit dem Anodenleiter und dem Isolator eine Baugruppe aus, die während der Herstellung mit dem separat dazu ausgebildeten Gehäuse verbindbar ist. Somit können Herstellungstoleranzen, die beim Verbinden des Anodenleiters mit der Anpasshülse auftreten, bei der Kopplung der Baugruppe mit dem Gehäuse wieder ausgeglichen werden. Die Ausrichtung der Baugruppe, insbesondere des Anodenleiters, relativ zum Gehäuse ist mit deutlich kleineren Herstellungstoleranzen möglich als beim Hartlötverfahren zur Verbindung des Anodenleiters mit der Anpasshülse auftreten.

Gemäß Ausführungsformen ist die Anpasshülse aus einem Metall gebildet, dessen Wärmeausdehnungskoeffizient innerhalb eines vorgegebenen Bereichs mit dem Wärmeausdehnungskoeffizient des Isolators korrespondiert. Der Isolator ist beispielsweise eine Keramik oder ein Glas. Somit dient die Anpasshülse als Bindeglied zwischen dem Gehäuse und dem Isolator. Das Material des Anpassrohres wird bezüglich des Wärmeausdehnungskoeffizienten so gewählt, dass ein Ausgleich zwischen dem Wärmeausdehnungskoeffizient des Gehäuses und dem Wärmeausdehnungskoeffizient des Isolators ermöglicht ist. Somit ist eine reduzierte Beanspruchung des Sensors möglich, da temperaturbedingte Spannungen durch die Anpasshülse aufgenommen und ausgeglichen werden.

Gemäß weiteren Ausführungsformen weist die Kathodenhülse an einem dem Gehäuse abgewandten Ende einen Innendurchmesser auf, der gleich ist wie oder größer ist als der Außendurchmesser der Anodenhülse zumindest in einem dem Gehäuse abgewandten Endbereich. Somit ist es möglich, die Ausrichtung der Kathodenhülse relativ zur Anodenhülse auch an dem, dem Ende abgewandten Ende und dem Endbereich möglichst genau und koaxial zu realisieren, beispielsweise mittels einer Lehre. Die Lehre richtet den Innendurchmesser und den Außendurchmesser präzise relativ zueinander aus.

Gemäß einer Ausführungsform der Erfindung umfasst ein Verfahren zur Herstellung eines Sensors, insbesondere eines Sensors für ein Kraftfahrzeug, ein Bereitstellen einer sich entlang einer Längsachse erstreckenden Anpasshülse mit zumindest abschnittsweise aufweisendem Außendurchmesser, mit der ein sich entlang der Längsachse innerhalb der Anpasshülse erstreckendender Anodenleiter mittels eines elektrischen Isolators starr verbunden ist. Der Anodenleiter ist länger ausgebildet als die Anpasshülse und weist einen Bereich auf, der entlang der Längsachse über die Anpasshülse vorspringt. Jeweils ein Gehäuse mit einem zumindest abschnittsweise aufweisenden Innendurchmesser, der größer ist als der Außendurchmesser der Anpasshülse, eine Anodenhülse und eine Kathodenhülse werden bereitgestellt. Die Anpasshülse und des Gehäuses werden relativ zueinander ausgerichtet, sodass der Anodenleiter und das Gehäuse im Rahmen der Herstellungstoleranzen koaxial zueinander sind. Die Anpasshülse wird mit dem Gehäuse verbunden. Die Anodenhülse wird auf den Bereich des Anodenleiters aufgesteckt. Die Kathodenhülse wird relativ zu der Anodenhülse ausgerichtet, sodass die Anodenhülse und die Kathodenhülse im Rahmen der Herstellungstoleranzen koaxial zueinander angeordnet sind. Die Anpasshülse ist mit einem Spiel im Gehäuse angeordnet. Die Kathodenhülse wird mit dem Gehäuse derart verbunden, dass die Kathodenhülse die Anodenhülse entlang der Längsachse umgibt und dass zwischen der Kathodenhülse und der Anodenhülse ein umlaufender Spalt ausgebildet ist.

Mit dem Herstellungsverfahren ist es möglich, einen Sensor herzustellen, der im Betrieb eine hohe Genauigkeit des Messsignals aufgrund eines exakten und konstanten Luftspalts zwischen Anodenhülse und Kathodenhülse aufweist. Hierzu wird zunächst die Anodenhülse mit dem Anodenleiter starr verbunden. Diese Baugruppe wird nachfolgend mit dem Gehäuse verbunden. Das Gehäuse und die Anpasshülse sind so dimensioniert, dass ein leichtes Spiel zwischen der Anpasshülse und dem Gehäuse möglich ist, wenn die Anpasshülse in das Gehäuse gesteckt wird. Somit ist es möglich, die Anpasshülse und insbesondere den Anodenleiter relativ zu dem Gehäuse exakt auszurichten. Mit dem Gehäuse wird nachfolgend die Kathodenhülse verbunden. Somit ist durch die Ausrichtung des Anodenleiters zu dem Gehäuse nachfolgend auch eine möglichst exakte Ausrichtung der Kathodenhülse zu der Anodenhülse ermöglicht. Das Gehäuse, mit dem die Kathodenhülse verbunden wird und die Anpasshülse, mit der die Anodenhülse mittelbar mittels des Anodenleiters verbunden wird, sind zunächst separate Bauteile, die relativ zueinander exakt ausgerichtet werden und nachfolgend miteinander verbunden werden, beispielsweise mittels eines Schweißprozesses.

Beispielsweise werden zum Bereitstellen der Anpasshülse der Anodenleiter und die Anpasshülse im Rahmen der Herstellungstoleranzen koaxial zueinander ausgerichtet und nachfolgend mittels Löten miteinander verbunden, insbesondere mittels eines Hartlötverfahrens. Die hierbei auftretenden Herstellungstoleranzen können nachfolgend durch die Ausrichtung der Anpasshülse relativ zu dem Gehäuse ausgeglichen werden. Die Herstellungstoleranzen, die beim Hartlöten auftreten, spielen im Gesamtsystem des Sensors somit nur noch eine untergeordnete Rolle.

Insbesondere wird mittels dem beschriebenen Herstellungsverfahren ein Sensor nach einer Ausführungsform hergestellt, wie oben erläutert. Die Verbindung mit dem Sensor angeführten Merkmale und Vorteile finden auch in Zusammenhang mit dem Herstellungsverfahren Verwendung und Umgekehrt.

Weitere Vorteile, Merkmale und Weiterbildungen ergeben sich aus den im Folgenden in Verbindung mit den Figuren erläuterten Beispielen. Gleiche, gleichartige und gleichwirkende Elemente können figurenübergreifend mit den gleichen Bezugszeichen versehen sein.

Es zeigen:
- Figur 1: eine schematische Schnittansicht einer Baugruppe für einen Sensor gemäß einer Ausführungsform,
- Figur 2: eine schematische Schnittansicht eines Teils des Sensors während der Herstellung gemäß einer Ausführungsform,
- Figur 3: eine schematische Darstellung einer Schnittansicht eines Teils des Sensors während der Herstellung einer Ausführungsform,
- Figur 4: eine schematische Darstellung einer Schnittansicht eines Teils des Sensors während der Herstellung einer Ausführungsform, und
- Figur 5: eine schematische Darstellung einer Schnittansicht des Sensors einer Ausführungsform.

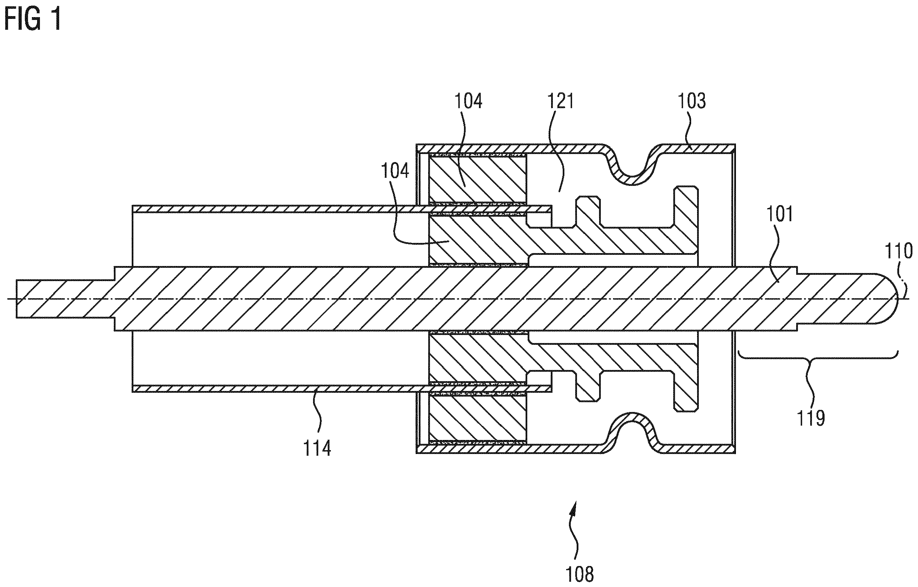

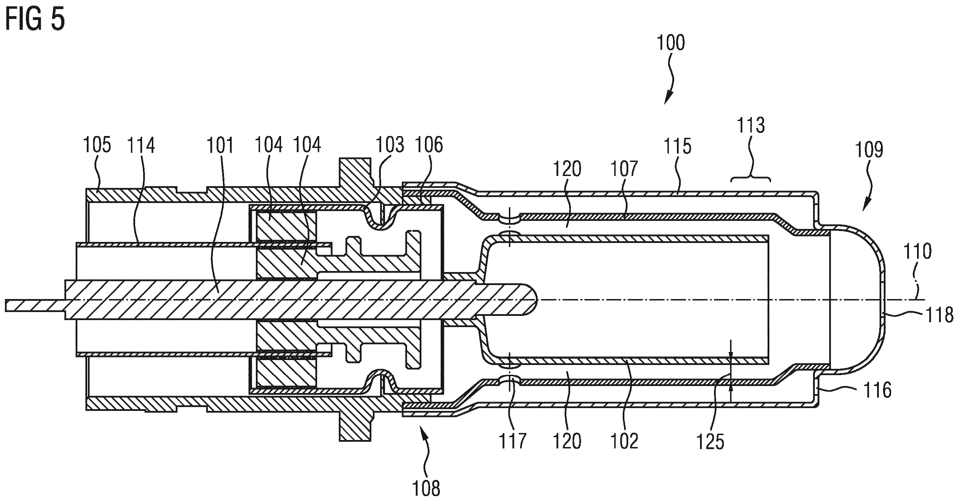

Figur 1 zeigt eine schematische Darstellung einer Schnittansicht einer Baugruppe 108. Die Baugruppe 108 ist insbesondere ein Teil für einen Sensor 100 (Figur 5). Die Baugruppe 108 weist eine Anpasshülse 103 auf. Mit der Anpasshülse ist ein Anodenleiter 101 verbunden. Der Anodenleiter 101 ist mittels eines Isolators 104 mit der Anpasshülse 103 verbunden. Zudem ist eine Innenhülse 114 vorgesehen, die mit dem Isolator 104 gekoppelt ist.

Die Anpasshülse 103 und der Anodenleiter 101 erstrecken sich jeweils länglich ausgedehnt entlang einer Längsachse 110. Der Anodenleiter 101 ist dabei länger ausgebildet als die Anpasshülse 103 und weist insbesondere einen Bereich 119 auf, der entlang der Längsachse 110 über die Anpasshülse 103 vorspringt.

Die Anpasshülse 103 ist aus einem Metall gebildet beziehungsweise weist das Metall auf, und umgibt einen Innenraum 121. Durch den Innenraum 121 erstreckt sich der Anodenleiter 101.

Der Isolator 104 ist aus einem hochisolierenden Material gebildet, beispielsweise aus einer Keramik oder einem Glas. Beispielsweise wird der Isolator zum Verbinden mit der Anpasshülse 103 und/oder dem Anodenleiter 101 auf entsprechenden Oberfläche metallisiert. Zum Verbinden des Anodenleiters 101 mit dem Isolator 104 und der Anpasshülse 103 wird ein Hartlötprozess mit Temperaturen von bis zu 950 °C durchgeführt. Der Anodenleiter 101 wird dabei möglichst koaxial zur Anpasshülse 103 gehalten. Nach dem Hartlötprozess sind der Anodenleiter 101 und die Anpasshülse 103 im Rahmen der Herstellungstoleranzen koaxial zur Längsachse 110 angeordnet. Die Baugruppe 108 umfasst die keramischen Bauteile, insbesondere den Isolator 104, den Sensor 101, die mit vergleichsweise großen Herstellungstoleranzen mit der Anpasshülse 103 beziehungsweise dem Anodenleiter 101 verbunden werden.

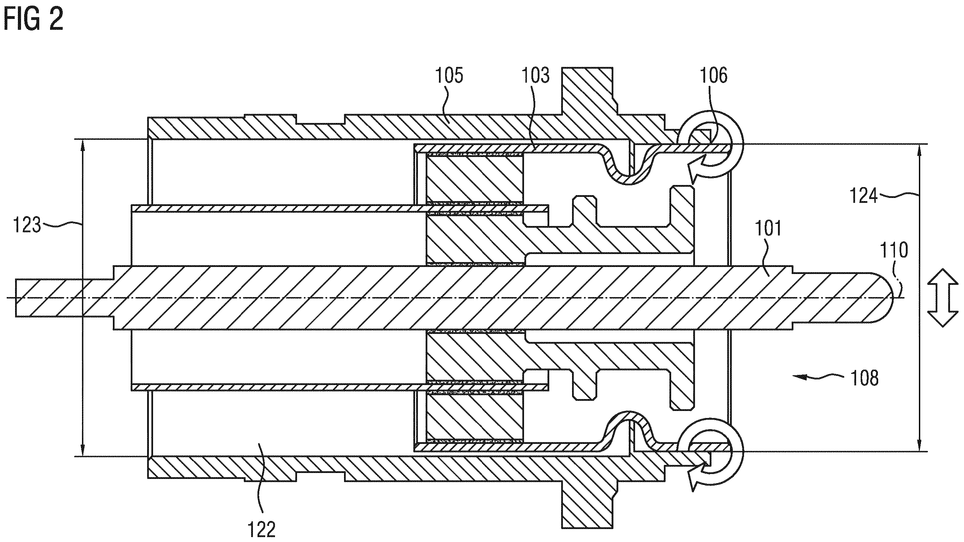

Figur 2 zeigt eine schematische Darstellung eines Teils des Sensors 101 in einem weiteren Schritt des Herstellungsverfahrens. Die Baugruppe 108 wird in ein Gehäuse 105 des Sensors 100 eingeschoben. Das Gehäuse 105 umgibt einen Hohlraum 122. Das Gehäuse 105 erstreckt sich entlang der Längsachse 110, so dass die Anpasshülse 103 zumindest teilweise in den Hohlraum 120 eingeschoben werden kann.

Das Gehäuse 105 weist zumindest abschnittsweise einen Innendurchmesser 123 auf. Die Anodenhülse weist zumindest abschnittsweise einen Außendurchmesser 124 auf. Der Innendurchmesser 123 und der Außendurchmesser 124 sind so aufeinander abgestimmt, dass die Anpasshülse 103 relativ zum Gehäuse 104 verkippt werden kann, wenn die Anpasshülse 103 im Gehäuse 104 angeordnet ist. Beispielsweise ist der Innendurchmesser 123 etwas größer als der Außendurchmesser 124. Die Anpasshülse 103 ist mit einem leichten Spiel im Gehäuse 105 angeordnet. Somit kann der Anodenleiter 101, insbesondere der Bereich 119 des Anodenleiters 101 quer zur Längsachse 110 verkippt werden und somit möglichst koaxial zum Gehäuse 105 ausgerichtet werden. Abweichungen der koaxialen Ausrichtung zwischen dem Anodenleiter 101 und der Anpasshülse 103, die während der Herstellung zwangsläufig auftreten, können somit zwischen Anodenleiter 101 und Gehäuse 105 ausgeglichen werden.

Aufgrund der relativen Beweglichkeit zwischen Anpasshülse 103 und Gehäuse 105 ist der Anodenleiter 101 möglichst koaxial zum Gehäuse 105 ausrichtbar. Die Anpasshülse 103 und das Gehäuse 105 werden nachfolgend mittels einer Verbindung 106 fest miteinander verbunden, beispielsweise verschweißt.

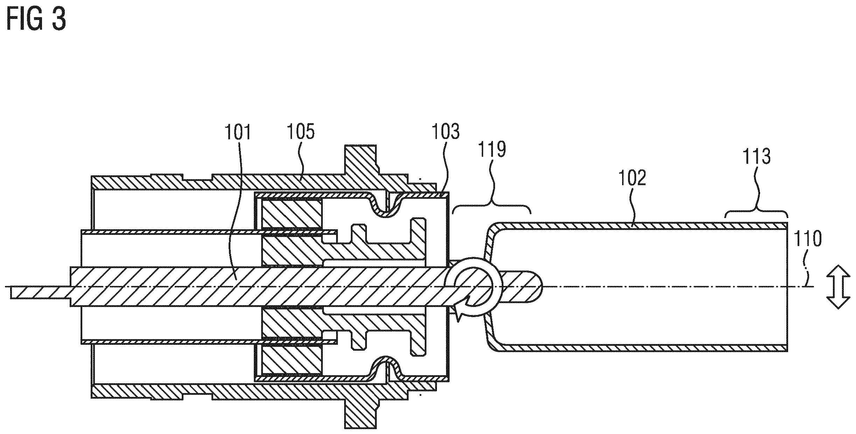

Figur 3 zeigt eine schematische Darstellung eines Teils des Sensors 101 während eines weiteren Schritts im Herstellungsverfahren. Eine Anodenhülse 102 wird auf den Bereich 119 des Anodenleiters 101 aufgesteckt. Die Anodenhülse 102 erstreckt sich länglich ausgedehnt entlang der Längsachse 110 und ist aus einem elektrisch leitfähigen Material gebildet. Da der Bereich 119 möglichst koaxial zum Gehäuse 105 ausgerichtet wurde und als Aufnahme für die Anodenhülse 102 dient, ist auch die Anodenhülse 102 zumindest im Bereich 119 möglichst koaxial zum Gehäuse 105 ausgerichtet. Um über die gesamte Länge der Anodenhülse 102 entlang der Längsachse 110 eine möglichst gute Koaxialität zu ermöglichen, wird die Anodenhülse 102 auch im Endbereich 113 relativ zum Gehäuse 105 ausgerichtet. Nachfolgend wird die Anodenhülse 102 mit dem Anodenleiter 101 verbunden.

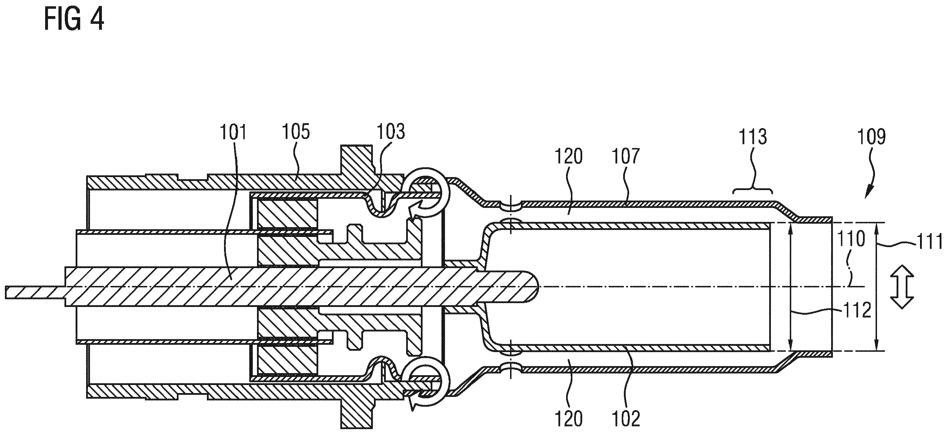

Figur 4 zeigt eine schematische Darstellung einer Schnittansicht eines Teils des Sensors 100 während eines weiteren Schritts im Herstellungsverfahren. Auf das Gehäuse 105 wird eine Kathodenhülse 107 aufgesteckt. Die Kathodenhülse 107 erstreckt sich länglich ausgedehnt entlang der Längsachse 110. Die Kathodenhülse 107 wird so auf das Gehäuse 105 aufgesteckt, dass die Kathodenhülse 107 die Anodenhülse 102 entlang der Längsachse 110 umgibt. Zwischen der Kathodenhülse 107 und der Anodenhülse 102 ist ein umlaufender Spalt 120 ausgebildet, insbesondere ein Luftspalt. Die Kathodenhülse 107 weist an einem Ende 109, das dem Gehäuse 105 abgewandt ist, einen Innendurchmesser 111 auf. Der Innendurchmesser 111 ist gleich oder größer als ein Außendurchmesser 112 der Anodenhülse 102. Somit können die Anodenhülse 102 und die Kathodenhülse 107 auch im Endbereich 113 beziehungsweise am Ende 9 möglichst koaxial zueinander ausgerichtet werden, beispielsweise mittels einer Lehre. Das Gehäuse 105 dient als Aufnahme für die Kathodenhülse 107. Die Anodenhülse 102 ist möglichst koaxial zum Gehäuse 105 ausgerichtet. Somit ist auch die Kathodenhülse 107 möglichst koaxial zur Anodenhülse 102 ausgerichtet. Dadurch wird ein exakter und konstanter Spalt 120 entlang der Längsachse 110 ermöglicht. Nachfolgend wird die Kathodenhülse mit dem Gehäuse verbunden, beispielsweise verschweißt.

Figur 5 zeigt eine schematische Darstellung einer Schnittansicht des Sensors 100. Eine Schutzhülse 115 ist über der Kathodenhülse 107 angeordnet, um den Sensor und insbesondere den Spalt 120 zu schützen. In der Schutzhülse 115 sind Öffnungen 116 vorgesehen. In der Kathodenhülse 107 sind Öffnungen 117 vorgesehen. In der Schutzhülse 115 ist eine weitere Öffnung 118 vorgesehen. Im Betrieb strömt das Abgas durch die Öffnungen 116, 117, 118 und somit durch den Spalt 120. Zwischen der Anodenhülse 102 und der Kathodenhülse 107 ist ein elektrisches Feld angelegt, das sich in Abhängigkeit der Konzentration von Rußpartikeln im Abgas verändert. Somit ist es möglich, mittels des Sensors 100 die Konzentration von Rußpartikeln im Abgas zu messen. Beispielsweise ist der Sensor 101 in einem Kraftfahrzeug stromabwärts eines Rußpartikelfilters angeordnet und dient zur Überprüfung, ob der Rußpartikelfilter ausreichend Rußpartikel aus dem Abgas filtert.

Der Sensor 100 weist die Anodenhülse 102 und die Kathodenhülse 107 auf, die als koaxiale Hohlzylinder ausgebildet sind. Beispielsweise sind die Anodenhülse 102 und die Kathodenhülse 107 jeweils aus einem Edelstahl gebildet.

Bei dem Sensor 100 ist der Isolatorenmetallverbund der Baugruppe 108 von den restlichen Bauelementen des Sensors 100 getrennt. Somit ist es möglich, den Spalt 120 durch die Montagevorrichtung zu beeinflussen beziehungsweise auszurichten. Somit ist die Herstellung des Sensors 100 weniger abhängig von hochgenauen Bauteilen. Die Isolatoren 104 und die fakultative metallische Innenhülse 114 werden in der separaten Anpasshülse 103 vormontiert und gelötet. Hierbei wird die Spitze des Anodenleiters 101, beziehungsweise der Bereich 119 möglichst koaxial zur Anpasshülse 103 gelötet. Dies sehr präzise mittels einer Lötlehre möglich. Durch die Trennung vom Gehäuse 105 bleibt die Lötbaugruppe 108 klein und handlich und steigert somit die Produktivität im zeitintensiven Lötprozess.

Die Baugruppe 108 wird nachfolgend in das Gehäuse 105 gesetzt und durch eine weitere Vorrichtung wird die Spitze des Anodenleiters beziehungsweise der Bereich 119 koaxial zum Gehäuse 105 ausgerichtet. Dies erfolgt durch eine leichte Verkippung der Anpasshülse 103 im Gehäuse 105. Nachfolgend werden die Baugruppe 108, insbesondere die Anpasshülse 103 und das Gehäuse 105 miteinander verschweißt.

Die Spitze des Anodenleiters 101 beziehungsweise der Bereich 119 dienen als Aufnahme für die Anodenhülse 102. Die Spitze des Anodenleiters 101 ist möglichst koaxial zum Gehäuse 105 ausgerichtet und somit ist auch die Anodenhülse 102 möglichst koaxial zum Gehäuse 105 ausgerichtet. Das Gehäuse 105 dient wiederum als Aufnahme für die Kathodenhülse 107, die somit analog dazu auch möglichst koaxial zur Anodenhülse 102 ausgerichtet ist. Somit ist ein maximal homogener, umlaufender Spalt 120 zwischen der Anodenhülse 102 und der Kathodenhülse 107 möglich.

Für die Montage der Kathodenhülse 107 wird ein Ende auf das Gehäuse 105 gesteckt. Das gegenüberliegende Ende 109 ist derart geformt, dass der Innendurchmesser 111 gleich ist wie oder größer ist als der Außendurchmesser 112 der Anodenhülse 102. Somit ist es möglich, eine Ausrichtlehre in die Kathodenhülse 107 einzustecken und die Anodenhülse 102 und die Kathodenhülse 107 relativ zueinander auszurichten. Die Kathodenhülse 107 und das Gehäuse 105 sind zumindest im gemeinsamen Kontaktbereich so geformt, dass die Kathodenhülse 107 relativ zu dem Gehäuse 105 verkippt werden kann. Somit ist eine Ausrichtung relativ zur Anodenhülse 102 möglich. Nach der möglichst präzisen koaxialen Ausrichtung wird die Kathodenhülse 107 am Gehäuse 105 festgeschweißt . Somit besteht über den gesamten Luftspalt ein maximal gleichmäßiger und umlaufender Abstand 125 zwischen der Kathodenhülse 107 und der Anodenhülse 102. Nachfolgend wird gegebenenfalls die Schutzhülse 115 montiert, um den Luftspalt 120 zu schützen.

Bei dem Sensor 100 sind die Elemente, die mittels Löten miteinander verbunden werden getrennt, von den üblichen Bauteilen. Somit spielen einzelne Bauteiltoleranzen und Herstellungstoleranzen im Gesamtsystem des Sensors 100 nur noch eine untergeordnete Rolle. Damit ist es möglich, einen konstanten Spalt 120 und damit im Betrieb ein konstantes elektrisches Feld unabhängig von den langen Toleranzketten durch die Einzelbauteile zu erzeugen.

Es können verschiedene Fügetechniken verwendet werden, um Isolatoren und die leitenden Teile miteinander zu fügen, zum Beispiel Keramikmetall, Glasmetall, metallisierte Keramikeramik, Keramikglas, Metallsteatid und weitere. Die bei diesen Fügetechniken auftretenden Herstellungstoleranzen werden nachfolgend durch die Ausrichtung relativ zum Gehäuse 105 möglichst ausgeglichen. Die einzelnen Bauteile können günstig und ohne hochgenaue Toleranzen gefertigt werden, da nachträglich ein Ausgleich der Toleranzen möglich ist.

Die Baugruppe 108 ist klein und kompakt und dadurch können mehr Einheiten gleichzeitig gelötet werden. Somit ist eine Verbesserung der Produktivität möglich. Der Ausschuss bei Fehllötungen oder Fehlfügungen kann reduziert werden, da das Gehäuse 105 erst später montiert wird.

Das Material der Anpasshülse 103 wird gemäß Ausführungsformen bezüglich seines Wärmeausdehnungskoeffizienten als Bindeglied zwischen dem Gehäuse 105 beziehungsweise dem Rest des Sensors 100 und dem Material des Isolators 104 optimiert. Somit ist eine reduzierte Beanspruchung des Metallisolatorenverbundes möglich, da Spannungen durch die Anpasshülse 103 aufgenommen werden können.

Der Aufbau des Sensors 100 insbesondere der Anodenhülse 102 und der Kathodenhülse 107 ist derart, dass die Möglichkeit der Ausrichtung und/oder Kontrolle der Anodenhülse 102 durch die Zugänglichkeit der Ausrichtlehre ermöglicht wird.

## Patentansprüche

1. Sensor (100) für ein Kraftfahrzeug, aufweisend:
- einen Anodenleiter (101), der sich entlang einer Längsachse (110) erstreckt,
- eine Anpasshülse (103), die sich entlang der Längsachse (110) erstreckt und zumindest abschnittsweise einen Außendurchmesser (124) aufweist, wobei der Anodenleiter (101) mittels eines elektrischen Isolators (104) starr mit der Anpasshülse (103) verbunden ist, wobei der Anodenleiter (101) länger ausgebildet ist als die Anpasshülse (103) und einen Bereich (119) aufweist, der entlang der Längsachse (110) über die Anpasshülse (103) vorspringt,
- eine Anodenhülse (102), die mit dem Anodenleiter (101) verbunden ist und auf den Bereich (119) des Anodenleiters (101) aufgesteckt ist,
- ein Gehäuse (105), das zumindest abschnittsweise einen Innendurchmesser (123) aufweist, der größer ist als der Außendurchmesser (124) der Anpasshülse (103), so dass die Anpasshülse (103) mit einem Spiel im Gehäuse (105) angeordnet ist,
- eine Verbindung (106), die das Gehäuse (105) und die Anpasshülse (103) miteinander verbindet,
- eine Kathodenhülse (107), die mit dem Gehäuse (105) derart verbunden ist, dass die Kathodenhülse (107) die Anodenhülse (102) entlang der Längsachse (110) umgibt und dass zwischen der Kathodenhülse (107) und der Anodenhülse (102) ein umlaufender Spalt (120) ausgebildet ist, wobei die Anodenhülse (102) und die Kathodenhülse (107) im Rahmen der Herstellungstoleranzen koaxial zueinander angeordnet sind.

2. Sensor nach Anspruch 1, bei dem die Verbindung, die das Gehäuse (105) und die Anpasshülse (103) miteinander verbindet, eine Schweißverbindung ist.

3. Sensor nach einem der Ansprüche 1 und 2, bei dem die Anpasshülse (103), der Anodenleiter (101) und der Isolator (104) mittels einer Lötverbindung miteinander verbunden sind.

4. Sensor nach einem der Ansprüche 1 bis 3, bei dem die Kathodenhülse (107) an einem dem Gehäuse (105) abgewandten Ende (109) einen Innendurchmesser (111) aufweist, der gleich ist wie oder größer ist als der Außendurchmesser (112) der Anodenhülse (102) zumindest in einem dem Gehäuse (105) abgewandten Endbereich (113) .

5. Verfahren zur Herstellung eines Sensors (100) für ein Kraftfahrzeug, umfassend:
- Bereitstellen einer sich entlang einer Längsachse (110) erstreckenden Anpasshülse (103) mit zumindest abschnittsweise aufweisendem Außendurchmesser (124), mit der ein sich entlang der Längsachse (110) innerhalb der Anpasshülse (103) erstreckendender Anodenleiter (101) mittels eines elektrischen Isolators (104) starr verbunden ist, wobei der Anodenleiter (101) länger ausgebildet ist als die Anpasshülse (103) und einen Bereich (119) aufweist, der entlang der Längsachse (110) über die Anpasshülse (103) vorspringt,
- Bereitstellen eines Gehäuses (105) mit einem zumindest abschnittsweise aufweisenden Innendurchmesser (123), der größer ist als der Außendurchmesser (124) der Anpasshülse (103), einer Anodenhülse (102) und einer Kathodenhülse (107),
- Ausrichten der Anpasshülse (103) und des Gehäuses (105) relativ zueinander, sodass der Anodenleiter (101) und das Gehäuse (105) im Rahmen der Herstellungstoleranzen koaxial zueinander sind,
- Verbinden der Anpasshülse (102) mit dem Gehäuse (105),
- Aufstecken der Anodenhülse (103) auf den Bereich (119) des Anodenleiters (101),
- Ausrichten der Kathodenhülse (107) relativ zu der Anodenhülse (102), sodass die Anodenhülse (102) und die Kathodenhülse (107) im Rahmen der Herstellungstoleranzen koaxial zueinander angeordnet sind, wobei die Anpasshülse (103) mit einem Spiel im Gehäuse (105) angeordnet ist,
- Verbinden der Kathodenhülse (107) mit dem Gehäuse (105) derart, dass die Kathodenhülse (107) die Anodenhülse (102) entlang der Längsachse (110) umgibt und dass zwischen der Kathodenhülse (107) und der Anodenhülse (102) ein umlaufender Spalt ausgebildet ist.

6. Verfahren nach Anspruch 5, bei dem das Verbinden der Anpasshülse (103) mit dem Gehäuse (105) umfasst:
- Ausbilden einer Schweißverbindung, die die Anpasshülse (103) und das Gehäuse (105) miteinander verbindet.

7. Verfahren nach Anspruch 5 oder 6, bei dem das Bereitstellen der Anpasshülse (103) umfasst:
- Ausrichten des Anodenleiters (101) und der Anpasshülse (103) im Rahmen der Herstellungstoleranzen koaxial zueinander bevor der Anodenleiter (101) starr mit der Anpasshülse (103) verbunden wird,
- Verbinden des Anodenleiters (101) mit der Anpasshülse (103) mittels Löten, so dass der Anodenleiter (101) und die Anpasshülse (103) im Rahmen der Herstellungstoleranzen koaxial zueinander sind.

8. Verfahren nach einem der Ansprüche 5 bis 7, umfassend:
- Ausrichten der Anodenhülse (102) und des Gehäuses (105) relativ zueinander, sodass die Anodenhülse (102) und das Gehäuse (105) im Rahmen der Herstellungstoleranzen koaxial zueinander sind, bevor die Anodenhülse (102) mit dem Anodenleiter (101) verbunden wird.

## Claims

1. Sensor (100) for a motor vehicle, comprising:
- an anode conductor (101) that extends along a longitudinal axis (110),
- an adapter sleeve (103) that extends along the longitudinal axis (110) and has an external diameter (124) at least in sections, wherein the anode conductor (101) is rigidly connected to the adapter sleeve (103) by means of an electrical insulator (104), wherein the anode conductor (101) is longer than the adapter sleeve (103) and has a region (119) that projects beyond the adapter sleeve (103) along the longitudinal axis (110),
- an anode sleeve (102) that is connected to the anode conductor (101) and is fitted onto the region (119) of the anode conductor (101),
- a housing (105) that has an internal diameter (123) that is greater than the external diameter (124) of the adapter sleeve (103) at least in sections, such that the adapter sleeve (103) is arranged in the housing (105) with play,
- a connection (106) that connects the housing (105) and the adapter sleeve (103) to one another,
- a cathode sleeve (107) that is connected to the housing (105) in such a way that the cathode sleeve (107) surrounds the anode sleeve (102) along the longitudinal axis (110) and that a circumferential gap (120) is formed between the cathode sleeve (107) and the anode sleeve (102), wherein the anode sleeve (102) and the cathode sleeve (107) are arranged coaxially with respect to one another within the scope of the production tolerances.

2. Sensor according to Claim 1, wherein the connection that connects the housing (105) and the adapter sleeve (103) to one another is a welding connection.

3. Sensor according to either of Claims 1 and 2, wherein the adapter sleeve (103), the anode conductor (101) and the insulator (104) are connected to one another by means of a soldering connection.

4. Sensor according to any of Claims 1 to 3, wherein the cathode sleeve (107) has, at an end (109) facing away from the housing (105), an internal diameter (111) that is greater than or equal to the external diameter (112) of the anode sleeve (102) at least in an end region (113) facing away from the housing (105).

5. Method for producing a sensor (100) for a motor vehicle, comprising:
- providing an adapter sleeve (103) that extends along a longitudinal axis (110) and has at least in sections having external diameter (124), an anode conductor (101) that extends along the longitudinal axis (110) within the adapter sleeve (103) being rigidly connected to the said adapter sleeve by means of an electrical insulator (104), wherein the anode conductor (101) is longer than the adapter sleeve (103) and has a region (119) that projects beyond the adapter sleeve (103) along the longitudinal axis (110),
- providing a housing (105) with an at least in sections having internal diameter (123) that is greater than the external diameter (124) of the adapter sleeve (103), an anode sleeve (102) and a cathode sleeve (107),
- aligning the adapter sleeve (103) and the housing (105) relative to one another, such that the anode conductor (101) and the housing (105) are coaxial with respect to one another within the scope of the production tolerances,
- connecting the adapter sleeve (102) to the housing (105),
- fitting the anode sleeve (103) onto the region (119) of the anode conductor (101),
- aligning the cathode sleeve (107) relative to the anode sleeve (102), such that the anode sleeve (102) and the cathode sleeve (107) are arranged coaxially with respect to one another within the scope of the production tolerances, wherein the adapter sleeve (103) is arranged in the housing (105) with play,
- connecting the cathode (107) to the housing (105) in such a way that the cathode sleeve (107) surrounds the anode sleeve (102) along the longitudinal axis (110) and that a circumferential gap is formed between the cathode sleeve (107) and the anode sleeve (102).

6. Method according to Claim 5, wherein connecting the adapter sleeve (103) to the housing (105) comprises:
- forming a welding connection that connects the adapter sleeve (103) and the housing (105) to one another.

7. Method according to Claim 5 or 6, wherein providing the adapter sleeve (103) comprises:
- aligning the anode conductor (101) and the adapter sleeve (103) coaxially with respect to one another within the scope of the production tolerances before the anode conductor (101) is rigidly connected to the adapter sleeve (103),
- connecting the anode conductor (101) to the adapter sleeve (103) by means of soldering, such that the anode conductor (101) and the adapter sleeve (103) are coaxial with respect to one another within the scope of the production tolerances.

8. Method according to any of Claims 5 to 7, comprising:
- aligning the anode sleeve (102) and the housing (105) relative to one another, such that the anode sleeve (102) and the housing (105) are coaxial with respect to one another within the scope of the production tolerances before the anode sleeve (102) is connected to the anode conductor (101).

## Revendications

1. Capteur (100) pour un véhicule automobile, présentant :
- un conducteur d'anode (101) qui s'étend le long d'un axe longitudinal (110),
- une douille d'adaptation (103) qui s'étend le long de l'axe longitudinal (110) et présente au moins par endroit un diamètre extérieur (124), le conducteur d'anode (101) étant relié rigidement à la douille d'adaptation (103) au moyen d'un isolateur électrique (104), le conducteur d'anode (101) étant réalisé pour être plus long que la douille d'adaptation (103) et présentant une zone (119) qui fait saillie le long de l'axe longitudinal (110) au-delà de la douille d'adaptation (103),
- une douille d'anode (102) qui est reliée au conducteur d'anode (101) et emmanchée sur la zone (119) du conducteur d'anode (101),
- un boîtier (105) qui présente au moins par endroits un diamètre intérieur (123) qui est supérieur au diamètre extérieur (124) de la douille d'adaptation (103) de sorte que la douille d'adaptation (103) est disposée dans le boîtier (105) avec du jeu,
- une liaison (106) qui relie le boîtier (105) et la douille d'adaptation (103) l'un à l'autre,
- une douille de cathode (107) qui est reliée au boîtier (105) de telle sorte que la douille de cathode (107) entoure la douille d'anode (102) le long de l'axe longitudinal (110) et qu'un intervalle périphérique (120) est réalisé entre la douille de cathode (107) et la douille d'anode (102), la douille d'anode (102) et la douille de cathode (107) étant disposées coaxialement l'une par rapport à l'autre dans la limite des tolérances de fabrication.

2. Capteur selon la revendication 1, dans lequel la liaison qui relie le boîtier (105) et la douille d'adaptation (103) l'un à l'autre est une liaison soudée.

3. Capteur selon l'une quelconque des revendications 1 et 2, dans lequel la douille d'adaptation (103), le conducteur d'anode (101) et l'isolateur (104) sont reliés ensemble au moyen d'une liaison brasée.

4. Capteur selon l'une quelconque des revendications 1 à 3, dans lequel la douille de cathode (107) présente à une extrémité (109) détournée du boîtier (105) un diamètre intérieur (111) qui est égal ou supérieur au diamètre extérieur (112) de la douille d'anode (102) au moins dans une zone d'extrémité (113) détournée du boîtier (105).

5. Procédé de fabrication d'un capteur (100) pour un véhicule automobile, comprenant les étapes consistant à :
- fournir une douille d'adaptation (103) s'étendant le long d'un axe longitudinal (110) et ayant moins par endroits un diamètre extérieur (124), à laquelle un conducteur d'anode (101) s'étendant le long de l'axe longitudinal (110) à l'intérieur de la douille d'adaptation (103) est relié rigidement au moyen d'un isolateur électrique (104), le conducteur d'anode (101) étant réalisé pour être plus long que la douille d'adaptation (103) et présentant une zone (119) qui fait saillie le long de l'axe longitudinal (110) au-delà de la douille d'adaptation (103),
- fournir un boîtier (105) ayant au moins par endroits un diamètre intérieur (123) qui est supérieur au diamètre extérieur (124) de la douille d'adaptation (103), d'une douille d'anode (102) et d'une douille de cathode (107),
- aligner la douille d'adaptation (103) et le boîtier (105) l'un par rapport à l'autre de sorte que le conducteur d'anode (101) et le boîtier (105) sont coaxiaux l'un par rapport à l'autre dans la limite des tolérances de fabrication,
- relier la douille d'adaptation (102) au boîtier (105),
- emmancher la douille d'anode (103) sur la zone (119) du conducteur d'anode (101),
- aligner la douille de cathode (107) par rapport à la douille d'anode (102) de sorte que la douille d'anode (102) et la douille de cathode (107) sont disposées coaxialement l'une par rapport à l'autre dans la limite des tolérances de fabrication, la douille d'adaptation (103) étant disposée dans le boîtier (105) avec du jeu,
- relier la douille de cathode (107) au boîtier (105) de telle sorte que la douille de cathode (107) entoure la douille d'anode (102) le long de l'axe longitudinal (110), et qu'un intervalle périphérique est réalisé entre la douille de cathode (107) et la douille d'anode (102).

6. Procédé selon la revendication 5, dans lequel le fait de relier la douille d'adaptation (103) au boîtier (105) comprend :
- la réalisation d'une liaison soudée qui relie la douille d'adaptation (103) et le boîtier (105) l'un à l'autre.

7. Procédé selon la revendication 5 ou 6, dans lequel la fourniture de la douille d'adaptation (103) comprend :
- l'alignement coaxial du conducteur d'anode (101) et de la douille d'adaptation (103) l'un par rapport à l'autre dans la limite des tolérances de fabrication avant que le conducteur d'anode (101) ne soit relié rigidement à la douille d'adaptation (103),
- la liaison du conducteur d'anode (101) à la douille d'adaptation (103) par brasage de sorte que le conducteur d'anode (101) et la douille d'adaptation (103) sont coaxiaux l'un par rapport à l'autre dans la limite des tolérances de fabrication.

8. Procédé selon l'une quelconque des revendications 5 à 7, comprenant :
- l'alignement de la douille d'anode (102) et du boîtier (105) l'un par rapport à l'autre de sorte que la douille d'anode (102) et le boîtier (105) sont coaxiaux l'un par rapport à l'autre dans la limite des tolérances de fabrication avant que la douille d'anode (102) ne soit reliée au conducteur d'anode (101).
